Europäisches Patentamt

European Patent Office

Office européen des brevets

(11) Veröffentlichungsnummer: **0 172 364**
**A1**

(12) # EUROPÄISCHE PATENTANMELDUNG

(21) Anmeldenummer: **85107956.6**

(22) Anmeldetag: **27.06.85**

(51) Int. Cl.⁴: **F 16 K 17/36**

(30) Priorität: **09.07.84 CH 3319/84**

(43) Veröffentlichungstag der Anmeldung:
**26.02.86 Patentblatt 86/9**

(84) Benannte Vertragsstaaten:
**CH DE FR LI**

(71) Anmelder: **Rickenbach, Hugo**
**Tellstrasse 6**
**CH-9000 St. Gallen(CH)**

(72) Erfinder: **Rickenbach, Hugo**
**Tellstrasse 6**
**CH-9000 St. Gallen(CH)**

(74) Vertreter: **EGLI-EUROPEAN PATENT ATTORNEYS**
**Horneggstrasse 4**
**CH-8008 Zürich(CH)**

(54) **Explosionsschutz-Ventil.**

(57) Das Ventil weist einen in einem Ventilgehäuse (1) gelagerten Ventilkörper (2) auf, der in der Oeffnungslage einen offenen Ringkanal (14) bildet. Mit dem Ventilkörper (2) ist ein Lagerrohr (22) verbunden, das auf einer Führungsstange (43) verschiebbar gelagert ist. Das Führungsrohr (7) ist mit einem Ende in einem Kopfstück (27) eines Mantelrohres (8) befestigt und ragt freitragend bis in den Bereich des Ventilkörpers (2). Kommt eine Druckwelle in Pfeilrichtung (53) an, wird der Ventilkörper (11) gegen einen Sitzring (18) gedrückt und dort durch einen Haltering (13) des Lagerrohrs (22) an einer Haltestange (32) gehalten. Dadurch, dass auf der Abströmseite des Ventilgehäuses (1) keine Einbauten angeordnet sind, kann auch bei der Förderung von Staub-Luft-Gemischen keine die Ansprechzeit vergrössernde oder Funktion behindernde Ablagerung gebildet werden.

./...

## Explosionsschutz-Ventil

Die Erfindung betrifft ein Explosionsschutz-Ventil für
Leitungen von Förderanlagen mit Staub-Luft-Gemischen, bei
dem in einem Gehäuse ein auf einer Führungsstange in Richtung der Gehäuselängsachse verschiebbarer Ventilkörper gelagert ist, der in der Betriebslage des Ventils in der
Oeffnungslage gehalten ist, und bei dem durch eine bei
einer Explosion entstehende Druckwelle eine Verschiebung
des Ventilkörpers in seine Schliesslage erfolgt, in welcher
er durch eine Haltevorrichtung gasdicht gehalten ist.

Als Schutz vor in Leitungen infolge Explosionen entstehenden Druckwellen und Feuerfronten ist es bekannt, spezielle
Ventile einzusetzen. Die Leitungen, in denen solche Ventile
eingebaut sind, müssen bei normalem Betrieb geöffnet sein,
jedoch sollen Sie bei Auftreten einer Explosion möglichst
verzögerungsfrei schliessen, um das Weiterschreiten von
Druckwellen und Feuerfronten zuverlässig zu verhindern.
Die Anwendung solcher Ventile kommt vor allem in pneumatischen Material- und Staubförderanlagen, in Anlagen
für Chemikalien, in Abluftleitungen und Pulverbeschichtungsanlagen und bei Atomreaktoren, in Frage.
Auch in Leitungen der Lebensmittelindustrie zur Förderung
von staubförmigen Materialien, die oft explosive Gemische bilden können, können Explosionsschutz-Ventile verwendet werden.

Bekannte Explosions-Schutzrechte weisen einen in einem Gehäuse auf einer Führungsstange verschiebbar gelagerten
Ventilkörper auf, wobei die Führungsstange an beiden Enden
gelagert und der Ventilkörper in der Betriebslage in der
Oeffnungslage gehalten ist. Eine auf den Ventilkörper
auftreffende Druckwelle verschiebt den Ventilkörper aus der
Oeffnungslage in die Schliesslage, in welcher er durch ein
mit dem Ventilkörper verbundenes Halteelement in seiner
Lage gehalten wird und so einen gasdichten Abschluss
bildet. Der Ventilkörper bleibt hierbei solange in seiner
Schliesslage, bis er durch Lösen eines mit dem Halteelement
zusammenwirkenden Anschlages wieder in seine Oeffnungslage
zurückkehren kann.

Die bekannten Explosionsschutz-Ventile weisen im wesentlichen bezüglich ihrer zur Ventilgehäuse-Längsachse senkrechten Mittenebene symmetrischen Aufbau auf. Wird in einer
Leitung mit einem solchen Ventil ein Staub-Luft-Gemisch
gefördert, entstehen auf der Abströmseite des Ventilkörpers
wegen der dort auftretenden Ablösung der Strömung und der
Entstehung von Wirbeln Staubablagerungen, die einen zusammenhängenden Belag bilden können, durch den das Ansprechen des Ventils infolge Materialverkrustung gestört
wird; dabei ist die dabei auftretende zeitliche Verzögerung
des Ansprechens nachteilig bzw. behindert des Schliessvorgang.

Hier setzt die Erfindung ein, der die Aufgabe zugrundeliegt, ein Explosionsschutz-Ventil der eingangs beschriebenen Art so weiterauszugestalten, dass das verzögerungsfreie Ansprechen des Ventils auch bei der Förderung von
Staub-Luft-Gemischen beliebiger Zusammensetzung gewährleitet ist.

- 3 -    0172364

Diese Aufgabe wird gemäss der Erfindung dadurch gelöst,
dass die Führungsstange an dem dem Ventilkörper abgewandten
Ende in einem, durch ein Kopfstück abgeschlossenes Mantelrohr freitragend gelagert ist und sich bis in den
Bereich des Ventilkörpers erstreckt. Dadurch wird erreicht,
dass die gesamte Lagerung des Ventilkörpers auf der Anströmseite angeordnet werden kann, während die Abströmseite
keine Einbauten aufweist und damit auch keine Ablagerungen
von transportiertem Staubmaterial entstehen können.

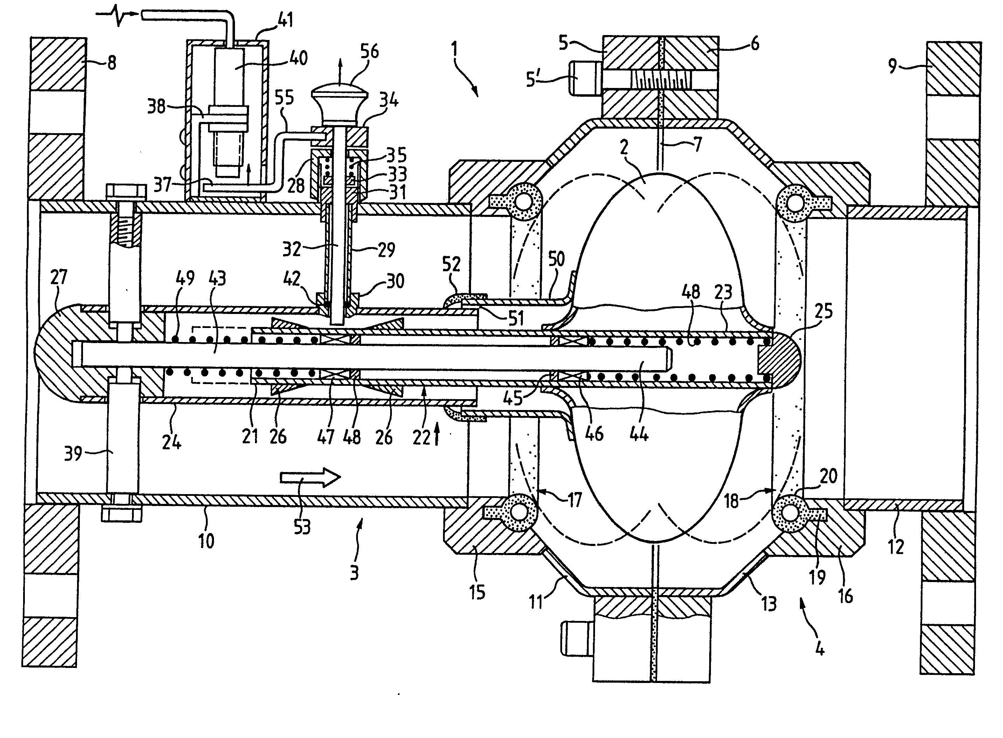

Die Erfindung ist in einem Ausführungsbeispiel in der
Zeichnung dargestellt und nachfolgend beschrieben. Die
einzige Figur der Zeichnung zeigt den Längsschnitt eines
erfindungsgemässen Explosionsschutz-Ventils, dessen Ventilkörper 2 sich in der Oeffnungslage befindet, wobei ein
ungehinderter Durchfluss durch das Ventil ermöglicht wird.
Der Ventilkörper 2 ist in einem Ventilgehäuse 1 gelagert,
das sich aus zwei Gehäuseteilen 3, 4 zusammensetzt, die
durch Flanschen 5, 6 und durch darin angeordnete Schraubenbolzen 5' unter Zwischenlage einer Flachdichtung 7
zusammengespannt sind. An den freien Enden der Gehäuseteile
3, 4 sind ebenfalls Flanschen 8, 9 angeordnet, die mit am
Ventil anschliessenden Leitungsteilen zusammengespannt zu
werden bestimmt sind. Der gegenüber dem Gehäuseteil 4
längere Gehäuseteil 3 setzt sich aus einem Rohrstück 10 und
einer mit diesem verbundenen Halbschale 11 zusammen,
während der Gehäuseteil 4 aus einem Rohrstutzen 12 und
einer Halbschale 13 zusammengesetzt ist. Am Uebergang
zwischen den Rohrstücken 10, 12 und den Halbschalen 11, 13
ist ein Ring 15, 16 angeordnet, in dem eine Nut zur Aufnahme eines auswechselbaren Weichdichtungsringes 17, 18
ausgespart ist. Die beiden Weichdichtungsringe 17, 18
setzen sich aus einem Ringteil 19 und einem Ringrohrteil 20
zusammen, wobei letzterer die Sitzfläche für den Ventil-

0172364

körper 2 bildet, wenn er sich in einer der gestrichelt
dargestellten Schliesslagen befindet.

Der Ventilkörper 2 ist auf einem Lagerrohr 22 befestigt,
von dem das eine Ende 21 sich aus dem Ventilkörper 2 erstreckt und in ein Mantelrohr 24 ragt, während das andere
Ende 23 sich durch den Ventilkörper 2 erstreckt und auf der
dem Mantelrohr 24 abgewandten Seite des Ventilkörpers 2
durch einen Zapfen 25 gasdicht geschlossen ist. An dem
einen Ende 21 des Lagerrohrs 22 sind zwei konische Halteringe 26 angeordnet, deren Funktion noch beschrieben wird.

Das Mantelrohr 24 ist im Rohrstück 10 koaxial auf 39
gelagert, die in einer Nabe 27 und in der Wand des Rohrstückes 10 befestigt sind. Im weitern ist im Rohrstück 10
ein Rohr 29 als Rohrdurchführung eingebaut, das am Mantelrohr 24 und an der Wand des Rohrstückes 10 mittels Muffen
30, 31 befestigt ist.

In der Rohrdurchführung 29 ist eine Haltestange 32 mit
einem Bund 33 geführt, deren Hub durch einen Stellring 34
begrenzt und durch eine von einer Ueberwurfmuffe 28 eingeschlossenen in der Muffe 31 angeordnete Feder 35 belastet
ist. Das in das Mantelrohr 24 ragende Ende der Haltestange
32 wirkt mit den Halteringen 26 zusammen und bildet einen
Anschlag, mit welchem der Ventilkörper 2 in einer der
beiden gestrichelt dargestellten Schliesslagen gehalten
wird. Bewegt sich der Ventilkörper 2 unter der Wirkung
einer Druckwelle in die eine oder andere Schliesslage, wird
die Haltestange 32 durch einen der Halteringe 26 angehoben
und anschliessend durch die Feder 35 in die Sperrlage
gebracht. Beim Ueberfahren des Halteringes 26 wird ein mit
der Haltestange 32 über an dem Stellring 34 und einen Arm
55 verbundener Teller 37 angehoben, der an einem benach-

0172364

barten Annäherungschalter 40 ein Signal bewirkt, das zur
Auslösung bestimmter Vorgänge, z.B. das Abschalten einer
Anlage, das Auslösen eines akustischen oder optischen
Signals ausgenützt werden kann. Der Annäherungsschalter 40
ist auf einem Halter 38 eines auf die Aussenfläche des
Rohrstückes 10 aufgesetzten Gehäuses 41 gelagert, wodurch
er und die Haltestange 32 vor Staubeinwirkung geschützt
sind. Die Haltestange 32 ist zudem durch eine in der Muffe
30 eingesetzten Dichtung 42, z.B. einen O-Ring, gegen den
Innenraum des Ventilgehäuses 1 abgedichtet. In der das
Lagerrohr 24 auf einer Seite abschliessenden Nabe 27 ist
eine Führungsstange 43 freitragend befestigt, deren Ende
44 sich in den Bereich des Ventilkörpers 2 erstreckt und
dort ein an einem Anschlagring 45 abgestütztes Lager 46,
z.B. ein Gleitlager- oder eine Kugellagerbüchse trägt. Ein
weiteres Lager 47 derselben Art ist im Lagerrohr 22 an
einem darin befestigten Anschlagring 48 abgestützt.

An dem Lager 46 auf der Führungsstange 43 ist das eine Ende
einer Druckfeder 48 abgestützt, während das andere Ende an
der Zapfen 25 anliegt. Die Druckfeder 48 versucht den
Ventilkörper 2 vom Mantelrohr 24 wegzubewegen. Dementsprechend ist eine weitere, der Druckfeder 48 entgegenwirkende
Druckfeder 49 im Mantelrohr 10 angeordnet, die sich mit
einem Ende an der Nabe 27 und mit dem andern Ende an dem
Lager 47 des Lagerrohrs 22 abstützt. Durch die beiden
Druckfedern wird der Ventilkörper 2 in der Betriebslage
gehalten. Auf der dem Mantelrohr 24 zugewandten Seite des
Ventilkörpers 2 ist ein Schutzstutzen 50 am Ventilkörper 2
befestigt, der in der Betriebslage das Mantelrohr 24
übergreift und den dabei entstehenden Spalt 51 durch eine
randseitige Weichdichtung 52, z.B.eine Dichtungsmanschette,
gegen Staubeinfall dichtet. Bei der Förderung eines Staub-
Luft-Gemisches ist die Förderrichtung mit einem Pfeil 53 angegeben. Da die Lagerung vollständig auf der Einströmseite liegt, ist der Gehäuseteil 4 ohne Einbauten und es
kann keine Ablagerung von Staubmaterial auftreten. Dadurch
wird die Funktion des Explosionsschutz-Ventiles nicht
beeinträchtigt, denn auf der Anströmseite findet durch hohe
Strömungsgeschwindigkeit keine Staubablagerung statt.

Das beschriebene Explosionsschutz-Ventil ist im normalen
Betrieb offen und der Ventilkörper 2 befindet sich in der
in der Figur dargestellten Mittellage. Kommt nun in Pfeilrichtung 53 eine Druckwelle an, wird der Ventilkörper 2 in
die Schliesslage gegen die Weichdichtung 18 bewegt und dort
durch die Haltestange 32 festgehalten. Dies ist erwünscht,
da meistens nach einem solchen Vorgang das Explosionsschutz-Ventil vollständig kontrolliert werden muss. Durch
Anheben der Haltestange 32 mit einem Handgriff 56 gegen die
Kraft der Feder 35 an der Muffe 31 wird der Ventilkörper 2
freigegeben und bewegt sich unter der Wirkung der Feder 48
wieder in die Mittellage. Tritt die Druckwelle entgegen dem
Pfeil 53 auf den Ventilkörper 2, wird dieser in die gegenüberliegende Schliesslage gebracht und dort wieder durch
die Haltestange 32 festgehalten.

Das beschriebene Explosionsschutz-Ventil ist in seinem
Aufbau einfach. Der Innenraum des Mantelrohres 24 ist
vollständig abgeschlossen, so dass die Lager 46, 47 vor
Staubanfall geschützt sind. Damit wird erreicht, dass die
Ansprechzeit des Ventils über längere Zeit unverändert
kurz, d.h. nur 30 - 50 Millisekungen, bleibt.

Da die den Ventilsitz bildenden Weichdichtungen 17, 18 nur
in die Ringe 15, 16 eingelegt sind, können sie bei Abnützung leicht ausgewechselt werden.

Patentansprüche

1. Explosionsschutz-Ventil für Leitungen von Förderanlagen mit Staub-Luft-Gemischen, bei dem in einem
Gehäuse (1) ein auf einer Führungsstange (43) in
Richtung der Gehäuselängsachse verschiebbarer Ventilkörper (2) gelagert ist, der in der Betriebslage
des Ventils in der Betriebslage gehalten ist, und
bei dem durch eine bei einer Explosion entstehenden
Druckwelle eine Verschiebung des Verstellkörpers in
seine Schliesslage erfolgt, in der er durch eine
Haltevorrichtung (27) gasdicht gehalten ist,
dadurch gekennzeichnet, dass die Führungsstange (43)
an dem dem Ventilkörper (2) abgewandten Ende in einem,
durch eine Nabe (27) abgeschlossenes Mantelrohr
(24) freitragend gelagert ist und sich bis in den
Bereich des Ventilkörpers (2) erstreckt.

2. Ventil nach Anspruch 1, dadurch gekennzeichnet, dass
auf der Führungsstange (43) ein den Ventilkorper (2)
tragendes Lagergestänge (22) im Schutzrohr (29)
verschiebbar geführt ist, bei dem das eine Ende (21)
aus dem Ventilkörper (2) ragt und Halteringe (26) der
Haltevorrichtung trägt und das andere Ende (23) den
Ventilkörper durchquert und an der Wand des Ventilkörpers endet.

3. Ventil nach Anspruch 1 oder 2 , dadurch gekennzeichnet, dass an dem freien Ende der Führungsstange (43)
ein erstes Lager (46) und in dem aus dem Ventilkörper
ragenden Ende (21) des Lagerrohres (22) ein zweites
Lager fest angeordnet sind.

4. Ventil nach einem der Ansprüche 1 bis 3, dadurch
gekennzeichnet, dass an der Stirnseite der ersten
Lagerbüchse (46) das eine Ende einer ersten Druckfeder (48) und an der zweiten Lagerbüchse (47) das
eine Ende einer zweiten Druckfeder (49) abgestützt
ist.

5. Ventil nach Anspruch 4, dadurch gekennzeichent, dass
das andere Ende der ersten Druckfeder (46) an der
Wandung, z.B. an einem Zapfen (25), des Ventilkörpers
(2) und das andere Ende der zweiten Druckfeder (49) an
der Nabe (27) des Mantelrohrs (24) abgestützt ist.

6. Ventil nach einem der Ansprüche 1 bis 5, dadurch
gekennzeichnet, dass an dem Ventilkörper (2) ein das
Mantelrohr (24) in der Betriebslage des Ventilkörpers übergreifender, eine randseitige Weichdichtung (52), z.B. eine Dichtungsmanschette, aufweisender Schutzstutzen (50) befestigt ist.

7. Ventil nach einem der Ansprüche 1 bis 6, dadurch
gekennzeichnet, dass das Mantelrohr (24) im Bereich
des Kopfstückes (27) mittels Streben (39 abgestützt
ist.

8. Ventil nach einem der Ansprüche 1 bis 7, dadurch
gekennzeichnet, dass am Mantelrohr (24) Rohrdurchführungen (28, 29) münden, in denen eine durch eine
Feder (35) belastete und mit den Halteringen (26) an
dem Lagerrohr (22) zusammenwirkende Haltestange (32)
geführt ist, dessen aus dem Ventilgehäuse (1) ragendes
Ende als Signalgeber, z.B. für einen Annäherungsschalter (40), ausgebildet ist.

9.  Ventil nach Anspruch 1, dadurch gekennzeichnet, dass als Sitz des Ventilkörpers (2) in dem Ventilgehäuse (1) ein eingelegter und auswechselbarer Weichdichtungsring (17, 18) vorgesehen ist.

1/1

0172364

Europäisches
Patentamt

# EUROPÄISCHER RECHERCHENBERICHT

## EINSCHLÄGIGE DOKUMENTE

EP 85107956.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | CH - A - 606 882 (RICKENBACH)<br>* Spalte 1, Zeile 47 - Spalte 2, Zeile 68; Fig. 1 *<br>-- | 1-6,8, 9 | F 16 K 17/36 |
| Y | CH - A - 554 509 (RICKENBACH)<br>* Gesamt *<br>---- | 1 | |

RECHERCHIERTE
SACHGEBIETE (Int. Cl 4)

F 16 K 17/00

F 16 K 35/00

F 16 K 37/00

A 62 C 39/00

B 65 G 69/00

Der vorliegende Recherchenbericht wurde für alle Patentansprüche erstellt.

| Recherchenort | Abschlußdatum der Recherche | Prüfer |
|---|---|---|
| WIEN | 27-11-1985 | ROUSSARIAN |